Europäisches Patentamt

**European Patent Office**

**Office européen des brevets**

(19)

(11) Publication number: **0 009 614**
**B1**

(12) **EUROPEAN PATENT SPECIFICATION**

(45) Date of publication of patent specification: **14.03.84**

(51) Int. Cl.³: **C 12 C 11/04**

(21) Application number: **79103161.0**

(22) Date of filing: **27.08.79**

(54) A brewing process.

(30) Priority: **29.08.78 US 937776**

(43) Date of publication of application:
**16.04.80 Bulletin 80/8**

(45) Publication of the grant of the patent:
**14.03.84 Bulletin 84/11**

(84) Designated Contracting States:
**AT BE CH DE FR NL SE**

(56) References cited:
**FR - A - 1 554 340**
**FR - A - 2 190 914**
**GB - A - 12 046**
**US - A - 2 122 761**
**US - A - 4 139 499**

(73) Proprietor: **LABATT BREWING COMPANY LIMITED**
**150 Simcoe Street**
**London, Ont. N6A 4M3 (CA)**

(72) Inventor: **Geiger, Kenneth Hartley**
**3 Robinwood Crescent**
**London Ontario, N6K 3B2 (CA)**

(74) Representative: **Kraus, Walter, Dr. et al,**
**Patentanwälte Dres. Kraus & Weisert**
**Irmgardstrasse 15**
**D-8000 München 71 (DE)**

Courier Press, Leamington Spa, England.

# A brewing process

The present invention is directed to a brewing process wherein a malt wort is prepared, supplemented with a sugar adjunct, fermented with brewers' yeast, and, following completion of the fermentation, finished to the desired alcoholic brewery beverage.

In a standard brewing process a fermentation substrate, "wort", is prepared from barley malt, and, in most instances, from additional carbohydrate adjunct material. The spectrum of saccharine materials in the wort depends on the characteristics of the malt that is used, the mashing conditions and the type and amount of adjunct material that is used. The adjunct material may be any appropriate form of starch or sugar.

A process of this kind is disclosed in FR—A—1,554,340. According to this prior art process, batch addition of the adjunct is carried out. According this publication, the liquid adjunct is added only when the fermentation cycle has reached the maltotriose fermentation stage.

Though maltose represents the largest percentage of the fermentable sugars derived from brewers' malt under standard mashing conditions invariably there are present in the wort additional fermentable sugars that are preferentially metabolized by the yeast. These sugars are sucrose, fructose and glucose and are hereinafter referred to as "highly fermentable sugars". However, the metabolism of these highly fermentable sugars, when present in a wort in abnormally high concentrations with respect to maltose, compared to the relative amounts of such substances in a standard wort, contribute significantly to the organoleptic properties, and hence basic character, of the resultant beer.

Also contributing to said organoleptic properties are the products obtained from the wort nitrogenous material originating from the malt. Further contributors to the organoleptic properties of the beer product are the yeast which effects the desired fermentation and the hops which are introduced into the wort during boiling thereof in the kettle.

If the amount of highly fermentable sugar, and in particular, glucose, in the wort when fermentation commences is increased significantly, say to over 10—12%, then the fermentation response of the yeast changes significantly. As noted above, the yeast preferentially metabolizes the highly fermentable sugars, especially glucose, and if the amount thereof is increased as described above, the yeast will utilize essentially the glucose during its rapid growth phase and for a period thereafter. As a consequence, the yeast does not adequately develop its capability to metabolize the more complex fermentable sugars such as maltotriose and as a result, is unable to do so efficiently in the latter part of the fermentation. Complete generation of the components which provide the beer product with its fundamental characteristics is not achieved. In addition, such systems are proven to result in hanging fermentations.

It should also be noted that the non-fermentables, such as the dextrins and the alcohol content are largely responsible for the caloric content of the desired beer product.

The present trend in North America is toward beers which, inter alia, have a caloric value lower than conventional beers, usually by a third or more. As noted above, the caloric value of a beer depends primarily on the alcohol content and residual carbohydrate content. The light beers usually have a reduced alcohol content, about 20% generally, but this is not sufficient to give the desired reduction in caloric value. It is, therefore, necessary to reduce the amount of non-fermentable sugars which emanate from the malt and adjunct, and which generally carry through the brewing process unchanged.

US—A—3,379,534 attempts to solve this latter problem by providing a process for preparing beer wherein the amylolytic enzyme amyloglucosidase is added to the mash and/or during the fermentation step of the brewing process. This is stated to impart to the resulting beer the property to remain free from haze for periods surprisingly longer than previously possible and also imparts to the resulting beer a lower caloric value than normally produced beers due to a reduction in the dextrin content. Although a minor amount of debranching enzymes may normally be present in the brewers' mashing materials, the amount thereof and the conditions extant in the wort result in their activity being insufficient to reduce to a significant extent the dextrins in the wort. Hence it is considered necessary according to the teaching of US—A—3,379,534 to add glucosidase to break down the dextrins in the fermentation medium and this will result, unless specific steps to the contrary are taken, in a residue of the enzyme in the bottled beer product which residue may continue to react and this can lead to flavour instability i.e. inconsistent product. Moreover, the introduction of additives into food products is presently causing increased concern because of possible health-related effects.

A further process which produces a lower carbohydrate beer is to be found in US—A—2,783,147, the disclosed process employing prolonged mashing and repeated additions of diastase for increasing the proportion of fermentable carbohydrates. These additions of diastase are followed by fermentation to produce a low carbohydrate beer, the process requiring substantial additional effort on the part of the brewer in addition to the normal brewing operations.

Yet a further process for producing a low carbohydrate alcoholic beer is disclosed in US—A—3,717,471, the claimed process involving subjecting barley malt to aqueous extraction under conditions favourable to the extraction of protein whilst unfavourable to the extraction of carbohydrates, hence the amount of non-fermentable sugars extracted is reduced. A highly fermentable sugar is then added to the resulting extract to produce, effectively, a reconstituted brewers' wort low in unfermentable carbohydrates. The final step involves fermenting the wort so produced. It should be noted that the reconstituted wort comprising the combined malt extract and the highly fermentable sugar (an example being glucose) is subjected to the action of brewers' yeast to form the desired product. The main claimed advantage of this process is the fact that there can be no residual added enzymes, such as the amyloglucosidase of US—A—3,379,534, in the beer product; the product is claimed to be analytically and organoleptically comparable to conventional bears. However, this process is subject to the disadvantages discussed above, inherent in malt fermentation processes initiated in the presence of large amounts of highly fermentable sugars as adjunct.

Also, as is well known, even minor changes in wort composition, brewing conditions, etc. radically alter the character of the beer product. Therefore, in processes such as that described in US—A—3,379,534, varying the malt extract: glucose ratio in the wort obviously results in a number of products having widely variable characteristics.

The object of the present invention is to reduce or even eliminate the disadvantages of the above processes if the wort produced from the malt is subjected to fermentation for a period sufficient to allow the yeast to substantially develop prior to the introduction of an adjunct comprising a highly fermentable sugar and optionally, other conventional adjunct materials.

This object is achieved by the present invention by initially fermenting a malt wort with brewers' yeast until said yeast is partially developed to at least about one-half of the maximum amount of development obtainable during the fermentation, thereby providing a partially fermented wort, thereafter introducing an adjunct comprising a highly fermentable sugar into the partially fermented wort over a period of time such that the Plato value of the fermenting wort substantially does not increase and osmotic shock is avoided and then continuing the fermentation, the degree of attenuation in the brewing process being 80% or more.

In this way, predictable production of the substances which determine the desirable favourable flavour characteristics, etc. of the beer product is ensured, and in addition, the fully developed yeast is able to act most effectively on the remaining wort and the adjunct addition thereby obtaining highly desirable low real extract values. In such instances, the degree of attenuation will generally be significantly higher than that obtained during normal brewing procedures, say 80% or more compared with maximums in the mid-70% range for normal brewing procedures. The capability for increased attenuation provides the present process with a further degree of flexibility since that capability need not be utilized to its fullest extent: in other words, a reduced degree of attenuation can be used as explained in more detail below to produce, for example, malt liquor or other products.

It will be appreciated that the type of malt wort and the ratio of wort to adjunct may vary between relatively wide limits, these factors being determinative as to the desired product. For example, in a highly preferred embodiment of the present invention where the process is used to produce a low caloric alcoholic product, an all-malt wort is used and the ratio malt wort: highly fermentable sugars must be such that the amount of non-fermentable sugars which will carry through to the final product must be minimized. In such cases, the adjunct will consist only of the highly fermentable sugars, and any non-fermentable sugars in the final product will originate only from the malt. In this way, increasing the amount of highly fermentable sugar relative to the malt extract in the wort will have the effect of reducing the percentage of non-fermentable sugars and hence the caloric value of the final product. It will also be appreciated that varying the amount of sugar in this way will effectively provide a series of products having differing alcohol contents but having basically similar organoleptic properties.

In an alternative embodiment of the process of the invention, the malt wort: adjunct ratio may be varied at will with the side objective of brewing a beer product having the desired organoleptic properties, the adjunct being either solely highly fermentable sugars or such sugars in combination with conventional adjunct materials. In this instance, the amount of non-fermentable sugars in the final product may be varied and such materials may emanate both from the malt wort and the conventional adjunct materials used.

The process of the invention may utilize a conventional brewers' malt. However, in one aspect, it is preferred to use a malt system comprising brewer's malt in combination with distillers' malt and/or caramel malt.

According to the present invention, there is provided a brewing process wherein a malt wort is prepared; supplemented with a sugar adjunct, fermented with brewers' yeast; and, following completion of the fermentation, finished to the desired alcoholic brewery beverage; the improvement comprising initially fermenting a malt wort with brewers' yeast until said yeast is partially developed to at least about one-half of the maximum amount of development obtainable during the fermentation, thereby providing a partially fermented wort, thereafter introducing an adjunct comprising a highly fermentable sugar into the partially fermented wort, and then continuing the fermentation.

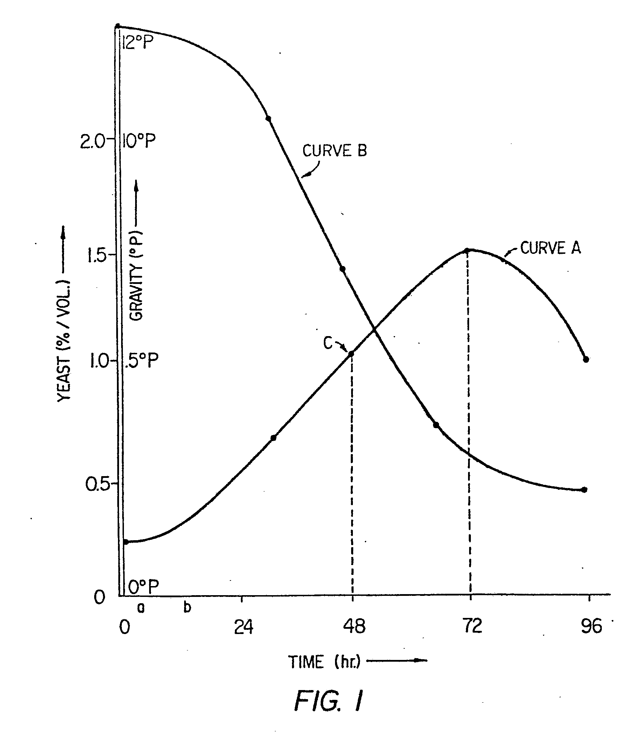

The time required for the yeast to act upon the malt wort prior to the addition of the fermentable sugar may vary depending upon fermenting conditions. This matter will be discussed in detail with reference to the accompanying Figure I, which details the course of a lager fermentation at 14.4°C (58°F) using 12° Plato wort.

Curve A of the Figure traces the growth response of the yeast during a normal fermentation and

3

Curve B traces the corresponding decrease in gravity of the wort. The amount of yeast in suspension during the fermentation is calculated as a percentage of the total fermenting mass. The fermentation was effected at 14.4°C (58°F). It can be seen that, following an initial short lag period, a period of rapid growth ensues until a maximum yeast value is attained, usually at about seventy-two (72) hours, following which, the yeast population in suspension remains constant or even falls thereafter until finally fermentation is, from a practical viewpoint, completed, although the available fermentable sugar supply is not generally fully exhausted at that time. The reason for this is that the changing fermentation conditions, alcohol content, oxygen content, etc. and condition of the yeast eventually result in the latter becoming ineffective. In the process of the present invention, it is essential that the yeast quantity is developed to a significant extent prior to the addition of the highly fermentable sugar. In the fermentation shown graphically in Figure I, the required degree of yeast growth is considered to have taken place by about point C, i.e. after about forty-eight (48) hours of fermentation. It will be readily appreciated that the specific time interval is not really significant or critical; this can vary widely since it depends on many parameters of the fermentation process, for example, temperature employed and original gravity of the wort. The only significant factor is the amount of yeast growth relative to the amount of yeast growth attainable is dictated or predetermined by the specific fermentation system. It should perhaps be emphasized that the maximum numerical amount or population of yeast in suspension is attained at a relatively early stage in the fermentation and that amount is maintained, or even slowly diminishes, over the remainder of the fermentation. As stated, in the typical wort fermentation situation represented in Figure I, sufficient yeast development has been achieved by point C, i.e. yeast growth is equal to at least about half and preferably about two-thirds of the maximum population attainable under the prevailing fermentation conditions. The information necessary to determine the, preferably all malt, wort fermentation period is easily obtained by carrying out a trial fermentation, generally at the laboratory or pilot brewery scale. The previously mentioned one-half to two-thirds minimum ratio of yeast growth is generally applicable and hence, this, in combination with the experimentally obtained yeast growth curve, allows the minimum period which must elapse prior to the addition to the wort of the adjunct comprising highly fermentable sugar to be readily determined.

The time period from commencement of fermentation to point C may vary quite widely depending mainly on the type of beer or ale being brewed and on the conditions but is usually at least 24 h and generally between 36 and 50 h. About 44 to 54 h has been found fully satisfactory for lagers. However, ales generally have higher fermentation rates and a period of 18 to 36 hours is satisfactory.

The ratio of extract obtained from the malt: extract obtained from the highly fermentable sugar is not critical and may be varied quite broadly. However, the ratio in general should be at least 60:40 and is usually at least 65:35 for the production of "light" beer products: a ratio of about 70:30 is greatly preferred.

The highly fermentable sugars—sucrose, fructose and glucose—may be introduced into the partially fermented wort in any convenient physical form. It has been found that solutions of such sugars are easily handled and consequently preferred. The concentration of such solutions is not critical and may vary widely: more concentrated solutions being advantageous in many instances since as a consequence lower volumes of solution need be handled. For that reason sugar concentrates within the range of about 15% (about 15°P) to as high as 65% (about 58°P) by weight are preferred. Solutions more concentrated than 65% are quite viscous and consequently are more difficult to handle.

The use of the highly fermentable sugar as the adjunct allows, as stated above, a wide variance in the amount of malt used and this provides for significant flexibility in the final brewery products obtainable. In addition, further flexibility as regards the organoleptic properties of the beer products may be obtained by changing the malt used or, indeed, by using mixtures of various kinds of malt having, for example, different tastes and/or enzymic activities. For example, the process of the present invention may be used to great advantage to produce a low caloric, reduced alcohol content beer, i.e. beer having a caloric value per 355 ml (12 ounce) unit of, say, less than 100 and an alcohol content of about 4% v/v., compared with the usual value of about 145—150 with an alcohol content of about 5% v/v. It should be emphasized that the full reduction in caloric value of the fermented beer product referred to immediately above is not accounted for solely by the reduction in alcohol content. The process of the present invention does allow the amount of malt used to be reduced compared with a normal brew with the result that the amount of non-fermentable sugars in the final product which emanate from the malt, are considerably reduced. In addition, the adjunct generally comprises solely highly fermentable sugars to the wort. Moreover, and significantly, it has been found that the withholding of the highly fermentable sugars during the initial growth phase according to the present invention is conducive to more vigorous utilization by the yeast of materials from the malt which materials are relatively more difficult to ferment and which the yeast will not attack if other more easily fermentable sugars are present. Consequently, a significant proportion of the more refractory fermentable sugars which are traditionally considered "non-fermentable" sugars are fermented during the process of the present invention, adding significantly to the reduction in caloric value and desirable organoleptic properties, and, it may be noted, rendering the fermentation process more efficient, since additional alcohol is obtained from the said "non-fermentable" sugar substrates.

In summary, the process of the present invention due in part to the significantly increased degree of attenuation which is achieved, allows the more efficient production of "light" products having reduced caloric values from worts having standard Plato values say 7—11°P. To our knowledge, prior to the present invention, this was only possible with brewing processes which utilized addition enzymes, such procedures having significant disadvantages (refer to the discussion above with respect to US—A—3,379,534). The process of the present invention, therefore, allows some reduction in product caloric value without a reduction in alcohol content.

It should be borne in mind, however, that many desirable characteristics of beer, such as body, taste, etc. are due in part to the presence in the beer of the said "non-fermentable" components. Consequently, it is preferable in certain circumstances to not attain the maximum degree of attenuation which the present process allows in the interests of obtaining desirable organoleptic properties in the beer product. Such a situation is encountered for example in the production of the fuller bodied, generally higher alcohol content products known, in Canada and elsewhere as "malt liquors". In other words, the process of the present invention has greater flexibility and allows "tailor-making" of products as desired, even including regular beer.

Since the present trend in many countries, for example Canada and the United States, is toward alcoholic brewery products having lower alcohol contents than in the past, the process of the present invention provides a major advantage in that it can be used to prepare such products without adversely affecting the properties which give the product its "beery" qualities, an essential characteristic difficult, if not impossible, to provide prior art low caloric beer products without the addition of special agents such as further enzymes capable of degrading the non-fermentable sugars. Therefore, although some reduction in caloric value can be obtained using the process of the invention without reducing the alcoholic content significantly, if a large reduction in a beer product caloric value is to be obtained and a full acceptable "beer" character and taste is to be retained, then a reduction in alcohol content, say from the usual 5% v/v. to the 4% v/v. discussed above may also be required in order to eliminate even more caloric imparting components from the product.

As indicated above, the process of the present invention may also be used to advantage to produce alcoholic brewery products other than the previously mentioned reduced caloric products. Since the alcohol content can be widely varied without significantly altering the organoleptic properties of the product, the procedure of "designing" a product is greatly simplified in that attention may be focused on the all important factors required to obtain the desired taste and other properties which determine the basic character of the desired product.

A further preferred feature of the present invention is the introduction of the highly fermentable sugar to the partly fermented all-malt wort, over a period of time, say, twelve (12) to forty-eight (48) h, in many cases, twenty-four (24) h or less. In fact, the rate of addition of the sugar should be such that the Plato value of the fermenting wort is not drastically increased from that extent when addition of the sugar commenced. This controlled introduction of the sugar into the fermenting wort over a period of time, which is obviously different from the alternate case wherein the total amount of sugar is added to the fermenting wort in one batch over a relatively short period of time, is termed "infusion" herein. It is believed that the presentation of the highly fermentable sugars to the yeast in this fashion approximates the natural generation of fermentable sugars by any amylolytic enzymes that may be present in or added to the wort during the fermentation stage thus removing the possibility of adverse effects such as osmotic shock, etc. which could affect the performance of the yeast, etc. and consequently, due to the introduction of further variables into the process, make product quality control difficult and product consistency very uncertain.

The present invention will be further described with reference to the following examples.

Example 1A

This example details the production of a beer product having a reduced caloric value (according to the definition referred to above). In order to demonstrate the superior characteristics of this process over the prior art processes, and, in particular, that of US—A—3,717,471, duplicate experiments were conducted as follows:

Procedure

An all-malt wort (9.4°P) was prepared using standard techniques familiar to those skilled in the art of brewing. The wort was then divided into two equal portions, A and B. To portion A was added an equivalent quantity value of highly fermentable sugar, namely, a sucrose solution (6.5°P) such that 40% of the final extract was derived from the added sucrose. The resulting "wort" mixture was then pitched with yeast, fermented and finished to the final beer product under standard brewing conditions.

Portion B was pitched in the fermenter with an equal quantity of yeast and fermentation under standard conditions allowed to proceed for forty-eight (48) h. Commencing at this point, a similar amount of sucrose solution as used in portion A above was infused into the fermenter over the succeeding twenty-four (24) h period.

The properties of the resulting beer products are given in the following table:

| | | A | B |
|---|---|---|---|
| Apparent Extract | % | 0.43 | 0 |
| Real Extract | % | 1.88 | 1.34 |
| Alcohol (wt) | % | 3.06 | 3.30 |
| Alcohol (v) | % | 3.89 | 4.17 |
| Calculated Original Extract | % | 8.0 | 7.9 |
| Caloric value (355 ml (12 oz.)) (normalized to 4% alcohol by volume) | | 109 | 93 |
| Attenuation | % | 76.5 | 83 |

It can be seen that the process of the present invention resulted in a significant decrease in real extract value and a product (B) which has a reduced caloric value compared with comparison A, although its alcohol content was higher, and a significantly higher degree of attenuation.

The two beer products were subjected to a full taste panel assessment procedure. Product A was found to have an objectionable cidery, fruity, winey character. On the other hand, product B was judged to have a markedly better flavour being noticeably smoother and clean tasting. It is appreciated that such evaluation is to some extent inherently subjective as far as preference is concerned in that acceptability or otherwise of such beer products is personal. In other words, a beer preferred by one consumer may be considered unacceptable to another. However, it is believed that the above comments are helpful in the present instance since they clearly demonstrate that the introduction of the highly fermentable sugar adjunct in the manner taught by the present invention has a significant effect on the organoleptic properties of the product. In fact, the beer product is clearly a different product to that product under similar conditions but using the prior art method of introducing the adjunct at the start of the fermentation.

Example 1B

Example 1A details inter alia the process of the present invention when an infusion technique was utilized to introduce the highly fermentable sugar solution into the partially fermented wort. As a further comparison the process of the present invention was carried out by the infusion embodiment and the bulk ("one shot") sugar addition embodiment, duplicate experiments being conducted as follows:

Procedure

An all-malt wort (pH about 7.7°P) was produced using standard techniques familiar to those skilled in the art. The wort was divided into two equal portions C and D; each portion was separately pitched with an equal quantity of lager yeast and fermented under standard conditions for three (3) days. At that time, an equal volume of 7.6% by weight glucose solution (about 7.8°P) was introduced via a one-shot method into the partially fermented wort of Portion D. At the same time, infusion of the same glucose solution was commenced into the partially fermented wort from Portion C: the infusion continued for twenty-four (24) h during which time, the same volume of glucose solution as introduced into Portion D wort had been introduced into Portion C wort. The two fermentations were then carried to completion in a similar manner and the products subjected to routine analysis.

Results

| | | C | D |
|---|---|---|---|
| Apparent Extract | % | 0.75 | 0.70 |
| Alcohol (vol) | % | 3.59 | 3.65 |
| Caloric value (355 ml (12 oz.)) | | 96.0 | 97.0 |
| Bitterness Units | | 9.0 | 10.5 |
| Attenuation | % | 69.0 | 70.0 |

Discussion

The course of the fermentation was followed by periodic determination of the Plato values of the two worts. The two fermentations proceeded in a similar fashion except, as expected, the Plato value of wort D rose very sharply on the addition of the glucose and only returned to the values extant in Portion C fermentation after a period of over twelve (12) h. The two worts fermented out to about the same degree.

As regards the products, reference to the above table shows there are minor differences but none of great significance. The indications are therefore that although the two embodiments do produce different products, the differences are not significant under the processing conditions used. It will be noted that the degree of attenuation is relatively low, especially when compared with the results usually obtained when using the process of the present invention for producing the "light" products. This is certainly due to the fact that, for experimental reasons the brewing cycle used in the procedure was not normal, the second mash holding period being of a duration less than half that normally used with the specific malt in question. If the cycle generally used for the specific malt had been used, the degree of attenuation achieved would be 80% or more.

## Example 2

This example again illustrates the production of a beer having a reduced caloric value (according to the definition referred to above), the malt substrate used comprising brewer's malt, distiller's malt and caramel malt.

### Procedure

An all-malt hopped wort was prepared using conventional brewing techniques, the malt system used comprising a mixture of brewers' malt, distillers' malt and caramel malt such that the kettle extract or wort was derived, 60% from brewer's malt, 35% from distiller's malt and 5% from caramel malt. Twenty (20) l of the wort containing 2.275 g of extract (at about 11°P) was pitched with 100 g of pressed lager yeast and delivered to a fermenter which was operated at a controlled temperature of 15°C.

Twenty (20) l of a hopped sugar solution containing 975 g sucrose (equivalent to about 4.7°P) and infused into the fermenting wort during the 48 h to 72 h period of the fermentation cycle. The sucrose solution represented 30% of the total extract associated with the resultant beer.

The total fermentation period lasted nine (9) days following which the green beer was transferred to storage and processed under routine brewery cellar conditions to finished beer. The bottled pasteurized beer upon analysis gave the following results:

| | | |
|---|---|---|
| Colour, °srm | | 3.2 |
| Foam s | | 117 |
| Calculated Original Extract | % | 8.3 |
| Apparent Extract | % | 0.0 |
| Real Extract | % | 1.62 |
| Alcohol, vol. | % | 4.30 |
| Alcohol, wt. | % | 3.39 |
| pH | | 4.0 |
| Diacetyl, ppm | | 0.04 |
| Bitterness Units | | 16.5 |
| Initial Haze, FTU | | 65 |
| Calories/355 ml (12 oz.) bottle | | 102 |
| Attenuation | % | 80 |

## Example 3

This example details the production of a high alcohol beer known as "malt liquors" with outstanding flavour attributes.

### Procedure

Sixty (60) l of a brewer's wort was prepared using convention brewing techniques such that 70% of the "malt" extract or wort was derived from brewers' malt and 30% derived from corn grits. This wort had an orginal gravity of 14.4° Plato with a relatively high non-fermentable extract content but with sufficient fermentable extract to produce a beer containing 5% alcohol by volume.

The wort was pitched with 200 g of pressed lager yeast and delivered to a fermenter operating at a controlled temperature of 15°C. Twenty (20) l of sugar solution containing 6,000 g of sucrose (equivalent to about 27°P) was infused into the fermenting wort during the 48 h to 72 h period of the fermentation cycle and following a total fermentation period of seven days, the green beer was transferred to storage and processed to finished beer under routine brewery cellar conditions. The bottled pasteurized product subjected to routine analysis and gave the following results:

| | | |
|---|---|---|
| Colour | | 3.7 |
| Foam, s | | 136 |
| Calculated Original Extract | % | 17.6 |
| Apparent Extract | % | 3.05 |
| Real Extract | % | 5.89 |
| Alcohol, vol. | % | 8.02 |
| Alcohol, wt. | % | 6.25 |
| pH | | 3.95 |

# 0 009 614

| Diacetyl, ppm | | 0.02 |
|---|---|---|
| Bitterness Units | | 18.5 |
| Initial Haze, FTU | | 57 |
| Attenuation | % | 67 |

The product is a full bodied malt liquor having a high alcohol content and excellent flavour charcteristics. It may be noted that the degree of attenuation at 67%, is appreciably lower than that achieved during the production of "light" beers.

It is worth noting that, from the specific examples, sucrose is obviously, at present, the most preferred highly fermentable sugar. However, it will be appreciated that, practically, any sugars which are readily fermentable by brewers' yeast could be used but from a practical consideration, only sucrose, fructose and glucose are commercially available.

In summary, the present invention provides a process which can be used to produce any type of alcoholic brewery beverage where a particular combination of taste characteristics is required, the process allowing the attainment of adequate body, fullness and alcohol content without the less desirable aspects of those three properties which arise from yeast growth in conventional brewing processes. The process is used to particular advantage to produce such products which, whilst retaining the desirable organoleptic properties of a full alcoholic strength product, actually have a significantly reduced caloric and alcoholic content.

## Claims

1. A brewing process wherein a malt wort is prepared; supplemented with a sugar adjunct, fermented with brewers' yeast; and, following completion of the fermentation, finished to the desired alcoholic brewery beverage; characterized in initially fermenting a malt wort with brewers' yeast until said yeast is partially developed to at least about one-half of the maximum amount of development obtainable during the fermentation, thereby providing a partially fermented wort, thereafter introducing an adjunct comprising a highly fermentable sugar into the partially fermented wort over a period of time such that the Plato value of the fermenting wort substantially does not increase and osmotic shock is avoided and then continuing the fermentation, the degree of attenuation in the brewing process being 80% or more.

2. The process according to claim 1 wherein said yeast is initially partially developed to at least about two-thirds of the maximum amount of development obtainable during the fermentation.

3. The process according to claim 1 or 2 wherein the wort is an all-malt wort.

4. The process according to any of claims 1 to 3 wherein the said adjunct is introduced into the partially fermented malt wort from 18 to 54 hours after the fermentation of the wort has commenced.

5. The process according to any of claims 1 to 3 wherein the said adjunct is introduced into the partially fermented malt wort from 18 to 36 hours after the fermentation of the wort has commenced.

6. The process according to any of claims 1 to 3 wherein the adjunct is introduced into the partially fermented malt wort from 44 to 54 hours after the fermentation of the wort has commenced.

7. The process according to any of claims 1 to 6 wherein the adjunct is solely a highly fermentable sugar.

8. The process according to claim 7 wherein the adjunct is solely sucrose.

9. The process according to any of claims 1 to 8 wherein the malt comprises brewers' malt and one or both of distillers' malt and caramel malt.

10. The process according to any of claims 1 to 9 wherein the highly fermentable sugar is introduced into the fermenting wort over a period of from 12 to 48 hours.

11. The process according to any of the preceeding claims wherein highly fermentable sugar is introduced into the fermenting wort in the form of an aqueous solution.

12. The process according to claim 11 wherein the said sugar solution comprises from 10% to 65% by weight of highly fermentable sugar.

13. The process according to claim 11 wherein the said sugar solution comprises at least 15% by weight of highly fermentable sugar.

## Revendications

1. Procédé de brassage où un moût de malt est préparé; complété d'une adjonction de sucre, fermenté par de la levure de brasseur; et après la fin de la fermentation, fini en une boisson alcoolique de brasserie souhaitée; caractérisé en ce que l'on fermente initialement un moût de malt avec de la levure de brasseur jusqu'à ce que ladite levure soit partiellement développée à au moins la moitié de la quantité maximum du développement pouvant être obtenu pendant la fermentation, afin de former ainsi un moût partiellement fermenté, et ensuite on introduit un produit d'adjonction comprenant un sucre très fermentable dans le moût partiellement fermenté sur une période de temps telle que la valeur de Plato du moût de fermentation n'augmente pas sensiblement et que le choc osmotique soit évité puis on continue la fermentation, le degré d'atténuation dans le procédé de brassage étant de 80% ou plus.

8

2. Procédé selon la revendication 1, où ladite levure est initialement partiellement développée au moins aux deux tiers de la quantité maximum de développement que l'on peut obtenir pendant la fermentation.

3. Procédé selon la revendication 1 ou 2, où le moût est un moût totalement de malt.

4. Procédé selon l'une quelconque des revendications 1 à 3, où ledit produit d'adjonction est introduit dans le moût de malt partiellement fermenté de 18 à 54 heures après que la fermentation du moût a commencé.

5. Procédé selon l'une quelconque des revendications 1 à 3, où ledit produit d'adjonction est introduit dans le moût de malt partiellement fermenté de 18 à 36 heures après que la fermentation du moût a commencé.

6. Procédé selon l'une quelconque des revendications 1 à 3, où le produit d'adjonction est introduit dans le moût de malt partiellement fermenté de 44 à 54 heures après que la fermentation du moût a commencé.

7. Procédé selon l'une quelconque des revendications 1 à 6, où le produit d'adjonction est uniquement un sucre très fermentable.

8. Procédé selon la revendication 7, où le produit d'adjonction est uniquement du saccharose.

9. Procédé selon l'une quelconque des revendications 1 à 8, où le malt comprend du malt de brasseur et du malt de distilleur ou du malt de caramel ou les deux.

10. Procédé selon l'une quelconque des revendications 1 à 9, où le sucre très fermentable est introduit dans le moût en fermentation sur une période de 12 à 48 heures.

11. Procédé selon l'une quelconque des revendications précédentes, où le sucre très fermentable est introduit dans le moût en fermentation sous la forme d'une solution aqueuse.

12. Procédé selon la revendication 11, où ladite solution de sucre comprend de 10% à 65% en poids de sucre très fermentable.

13. Procédé selon la revendication 11, où ladite solution de sucre comprend au moins 15% en poids de sucre très fermentable.

**Patentansprüche**

1. Brauverfahren, bei dem man eine Malzwürze herstellt, mit einem Zuckerzusatz ergänzt, mit Bierhefe fermentiert und nach der Vervollständigung der Fermentation zu dem gewünschten alkoholischen Braugetränk fertigstellt, dadurch gekennzeichnet, daß man am Anfang eine Malzwürze mit Bierhefe fermentiert, bis die genannte Hefe teilweise bis zumindest etwa der Hälfte der maximalen Menge der während der Fermentation erhältlichen Entwicklung entwickelt ist, wodurch man eine teilweise fermentierte Würze erhält, danach einen Zusatz, umfassend einen hoch-fermentierbaren Zucker, in die teilweise fermentierte Würze über einen derartigen Zeitraum einführt, daß der Plato-Wert der fermentierenden Würze sich praktisch nicht erhöht und daß ein osmotischer Schock vermieden wird, und daß man hierauf die Fermentation weiterführt, wobei der Schwächungsgrad bei dem Brauverfahren 80% oder mehr ist.

2. Verfahren nach Anspruch 1, dadurch gekennzeichnet, daß man die genannte Hefe am Anfang teilweise zumindest etwa zu zwei Dritteln der maximalen Menge der während der Fermentation erhältlichen Entwicklung entwickelt.

3. Verfahren nach Anspruch 1 oder 2, dadurch gekennzeichnet, daß die Würze eine Allmalzwürze ist.

4. Verfahren nach einem der Ansprüche 1 bis 3, dadurch gekennzeichnet, daß man den genannten Zusatz in die teilweise fermentierte Malzwürze 18 bis 54 h nach Beginn der Fermentation der Würze einführt.

5. Verfahren nach einem der Ansprüche 1 bis 3, dadurch gekennzeichnet, daß man den genannten Zusatz in die teilweise fermentierte Malzwürze 18 bis 36 h nach Beginn der Fermentation der Würze einführt.

6. Verfahren nach einem der Ansprüche 1 bis 3, dadurch gekennzeichnet, daß man den genannten Zusatz in die teilweise fermentierte Malzwürze 44 bis 54 h nach Beginn der Fermentation der Würze einführt.

7. Verfahren nach einem der Ansprüche 1 bis 6, dadurch gekennzeichnet, daß der Zusatz lediglich ein hoch-fermentierbarer Zucker ist.

8. Verfahren nach Anspruch 7, dadurch gekennzeichnet, daß der Zusatz lediglich Saccharose ist.

9. Verfahren nach einem der Ansprüche 1 bis 8, dadurch gekennzeichnet, daß das Malz Brauereimalz und eines oder beide von Branntwein-Brennmalz und Karamelmalz ist.

10. Verfahren nach einem der Ansprüche 1 bis 9, dadurch gekennzeichnet, daß man den hoch-fermentierbaren Zucker in die fermentierende Würze über einen Zeitraum von 12 bis 48 h einführt.

11. Verfahren nach einem der vorstehenden Ansprüche, dadurch gekennzeichnet, daß man den hoch-fermentierbaren Zucker in die fermentierende Würze in Form einer wäßrigen Lösung einführt.

12. Verfahren nach Anspruch 11, dadurch gekennzeichnet, daß die genannte Zuckerlösung 10 bis 65 Gew.-% hoch-fermentierbaren Zucker enthält.

13. Verfahren nach Anspruch 11, dadurch gekennzeichnet, daß die genannte Zuckerlösung mindestens 15 Gew.-% hoch-fermentierbaren Zucker enthält.

FIG. 1